# EUROPEAN PATENT APPLICATION

(11) **EP 4 617 437 A2**
(43) Date of publication of application: **17.09.2025**
(21) Application number: 25162720.4
(22) Date of filing: 10.03.2025
(51) Int. Cl.: E02F 9/26

(54) **A WORKING MACHINE**

(30) Priority: 11.03.2024 GB 202403477
(71) Applicant: J.C. Bamford Excavators Limited, Uttoxeter Staffordshire ST14 5JP (GB)
(72) Inventor: Smith, Duncan, Uttoxeter, ST14 5JP (GB)
(74) Representative: Foot, Paul Matthew James

(57) **Abstract**

A working machine comprising:
a ground engaging propulsion structure;
a body mounted to the ground engaging propulsion structure;
an operator station mounted to the body;
a working arm mounted to the body such that the working arm and/or an implement attached thereto obscures a portion of a sight line from an operator seated in the operator station;
wherein a camera is arranged on a structure moveable with the working arm on a side of the arm remote from the operator station; and wherein a display at the operator station is arranged to show a live video image from the camera of at least a portion of the sight line obscured by the working arm.

## Description

### FIELD

The present teachings relate to a working machine, a controller, and a camera control system for a working machine. In particular, but not exclusively, the present teachings relate to excavator having a camera mounted thereon.

### BACKGROUND

Various types of working machines are known. Such machines are used typically for soil-shifting operations and attachment handling (e.g. trenching, grading, loading, waste handling, tree and vegetation management, drainage and forestry) and materials handling (e.g. depositing aggregate in trenches, lifting materials and placing them on an elevated platform).

Slew excavators comprise a superstructure rotatable in an unlimited fashion relative to an undercarriage. The superstructure includes a working arm arrangement for manipulating an attachment, such as a bucket, to perform working operations of the type listed above, a prime mover, such as a diesel IC engine, a hydraulic pump, and an operator cab. The prime mover drives the hydraulic pump, in order to provide pressurised fluid to operate the working arm arrangement, and also to power one or more hydraulic motors located in the undercarriage that are used to selectively drive either two endless tracks or four wheels (or eight wheels in a dual wheel configuration) for propelling the excavator.

A slew ring rotatably connects the superstructure and undercarriage, and a central rotary joint arrangement enables hydraulic fluid to pass from the pump in the superstructure to the hydraulic motor, and return to the superstructure, irrespective of the relative positions of the superstructure and undercarriage. If the slew excavator uses tracks for propulsion, steering is effected by differentially driving the tracks on opposing sides of the undercarriage. If the slew excavator uses wheels for propulsion, a steering arrangement is used for either two or four wheels, and separate hydraulic control is required for this in the undercarriage.

Slew excavators are available in a wide range of sizes. Micro, mini and midi excavators span an operating weight range from around 718kg up to around 16,000kg and are notable for typically having a working arm arrangement that is capable of pivoting about a substantially vertical axis relative to the superstructure by using a "kingpost" interface to the superstructure. Generally, mini and midi excavators have a weight of above around 1,200 kg. Large excavators, whose operating weight exceeds around 12,000kg are often referred to as 'A frame' excavators and typically have a working arm arrangement that is fixed about a vertical axis, and can therefore only slew together with the superstructure. This is a function of the fact that the smaller excavators are expected to operate in more confined spaces and the ability to slew about two mutually offset axes in order to, for example, trench close to an obstacle such as a wall is therefore more desirable for micro, mini and midi excavators.

The working arm arrangement generally includes a boom pivotally connected to a dipper. There are several types of booms available including: a triple articulated boom which has two pivotally connected sections; and a mono boom that is often made from a single generally curved structure. A dipper is pivotally connected to the boom and a mount for an attachment, e.g. a bucket, is provided on the dipper. Hydraulic cylinders are provided to move the boom, dipper and mount relative to each other so as to perform a desired working operation.

Tracked excavators are not able to travel under their own propulsion for significant distances due to a low maximum speed and the damage their metal tracks cause to paved roads. However their tracks enhance the stability of the excavator. Wheeled excavators are capable of "roading" at higher speeds (typically up to 40kph), and without appreciably damaging paved road surfaces. However, the working arm assembly inevitably extends forward of the superstructure during roading, which can impair forward visibility.

Excavators are traditionally used for soil shifting operations such as digging, but are increasing used as a more general tool carrier utilising a wide range of attachments. Some attachments, such a planers or buckets mounted via tiltrotators are quite bulky and can restrict the operator's view from their operator station.

### SUMMARY

The present teachings seek to overcome, or at least mitigate one or more of the problems of the prior art.

The present teachings provide a working machine of claim 1, a controller of claim 12, a camera control system of claim 19 and a working machine of claim 20 according to the appended claims.

An aspect of the teachings provides a working machine. The working machine may comprise one or more of: a ground engaging propulsion structure; a body mounted to the ground engaging propulsion structure; an operator station mounted to the body; a working arm mounted to the body such that the working arm and/or an implement attached thereto obscures a portion of a sight line from an operator seated in the operator station. A camera may be arranged on a structure moveable with the working arm on a side of the arm remote from the operator station. A display at the operator station may be arranged to show a live video image from the camera of at least a portion of the sight line obscured by the working arm.

Advantageously, this arrangement ensures that as the working arm moves, the camera automatically follows the motion of the working arm and thereby automatically ensures that the live image from the camera continues to show the obscured view to the operator.

The working arm may be pivotably mounted to the body for movement about a substantially vertical axis relative to the body and the camera is mounted so as to move at least together with the movement of the arm about the vertical axis.

Advantageously, this ensures that the camera covers the blind spot during a swinging motion of the working arm throughout the full range of the swinging motion.

The working arm may comprise a kingpost mounted to the body for movement about the vertical axis and the camera may be mounted to the kingpost.

Advantageously, this provides a convenient location for mounting the camera where it is protected from unintentional damage by being close to the body of the machine, but nevertheless is able to follow the movement.

A linear actuator may be mounted between the working arm and the body to effect the pivotal motion, a bracket being provided on the working arm to secure the actuator, and the camera being mounted to the bracket.

Advantageously, this position further protects the camera from unintended damage without needing to provide additional protection.

A pivot pin may mount the linear actuator to the bracket and the camera may also mount to a fixing also utilised to fix the pivot pin.

Advantageously, this saves cost by avoiding the need to provide an additional fixing structure on the bracket.

The display may be mounted to the operator station at a side of the operating station proximate to the working arm.

This arrangement is beneficial ergonomically for the operator, since they are able to consult the display to see the blind spot that is obscured by the working arm by looking in the same direction as the working arm.

The display may be in a line of sight from the operator to the working arm.

The working machine may further comprise a control system arranged to control operation of the camera and/or display.

The working machine may further comprise at least one sensor to determine or infer a position of the working arm, for example a vertical position of the working arm. The control system may adjust the video image shown on the display in response to this position.

Advantageously, this further enhances visibility an operator has of what otherwise would be a blind spot.

The controller may be configured so as to output to the display a subset of the total field of view captured by the camera, so as to present a zoomed in video image to the operator via the display.

Advantageously this is a low cost and robust way of directing the output signal as required.

The zoomed in image may be configured to follow the movement of the working arm as determined by the one or more sensors.

Advantageously, this may further assist the operator in seeing the blind spot.

A second aspect of the teachings provides a controller for a camera control system of a working machine comprising a working arm. The controller may be configured to receive an video signal from a camera and may receive a position signal from at least one position sensor able to derive or infer a position relative to a body of the working machine of the working arm and/or an attachment mounted to the working arm. The controller may be further configured to cause an output video signal to be sent to a display to adjusted based on the position derived or inferred from the at least one position sensor.

In this way the controller is able to allow an operator to see an image of a location around the machine that may otherwise be obscured by the working arm.

The video signal to be sent to the display may be orientated in a pre-determined direction based on the position derived or inferred from the at least one position sensor.

The camera may supply a video signal from an array of camera photosensors and the controller may be configured to select a subset of said photosensors as the output video signal to orientate the output signal in the pre-determined direction.

Advantageously this is a low cost and robust way of directing the output signal as required.

The controller may be configured to continuously vary the selected subset of photosensors in response to changes in the position signal.

Advantageously, this further enhances visibility an operator has of what otherwise would be a blind spot.

The camera may be motorised to pan and/or tilt and/or zoom and the controller may be further configured to output a panning and/or tilting and/or zooming signal in response to the position signal.

The video signal may be the position signal and the controller may run an algorithm, such as a machine vision algorithm, to process the video signal to derive the working arm and/or attachment position.

Advantageously this may avoid the need for additional sensors to be provided to determine the position of the working arm.

The controller may be configured to operate in a first fixed view operating mode based on at least a first machine operation input, and to operate in a second operating mode in which the output video signal to be sent to the display to be adjusted based on the position derived or inferred from the at least one position sensor based on a second machine operation input.

The controller may run an image classification algorithm to process the video signal, and if the algorithm identifies a pre-determined object within the video signal, the controller may be configured to issue an alert signal to an operator and/or to issue a signal to cease movement of or to slow down the working arm relative to the working and/or cease or slow down movement of the working machine.

Advantageously this my further improve the safety of the working machine.

A third aspect of the teachings provides a camera control system for a working machine, the camera control system comprising one or more of a controller according to the second aspect, a camera arranged to provide an video signal to the controller; at least one position sensor arranged to provide the position signal to the controller; and a display arranged to display a video image to an operator based on an video signal issued by the controller.

A fourth aspect of the teachings provides a working machine comprising a controller according to the second aspect or a camera control system according to the third aspect.

The working machine may comprise at least one of a ground engaging propulsion structure; a body mounted to the ground engaging propulsion structure; an operator station mounted to the body; and a working arm mounted to the body such that the working arm and/or an implement attached thereto obscures a portion of a sight line from an operator seated in the operator station;

The body may comprises an undercarriage mounted to the ground engaging propulsion structure and a superstructure slewably mounted to the undercarriage.

The working arm may be mounted to the superstructure.

The working machine may be a slew excavator.

### BRIEF DESCRIPTION OF DRAWINGS

Embodiments will now be described by way of example only with reference to the accompanying figures, in which:
Figure 1 is a side view of a cab side of a working machine of an embodiment of the present teaching;
Figure 2 is a plan view of the working machine to Figure 1;
Figure 3 is a schematic plan view of the working machine to Figure 1 with a working arm in a different position to Figure 2;
Figure 4 is an isometric view of part the working machine of Figures 1 and 2 viewing through the cab to the working arm;

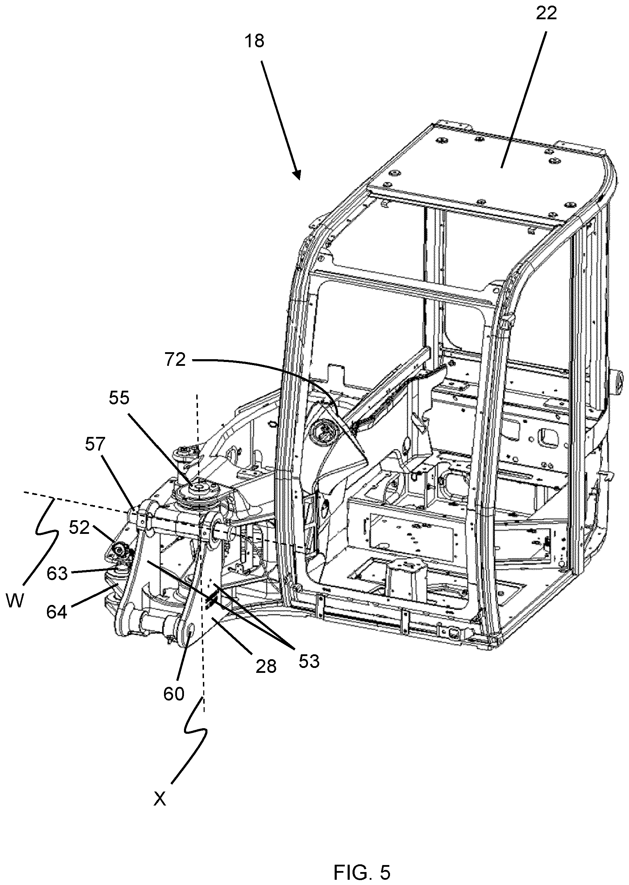

Figure 5 is an isometric view of structural components of a superstructure of the working machine of Figures 1 and 2;

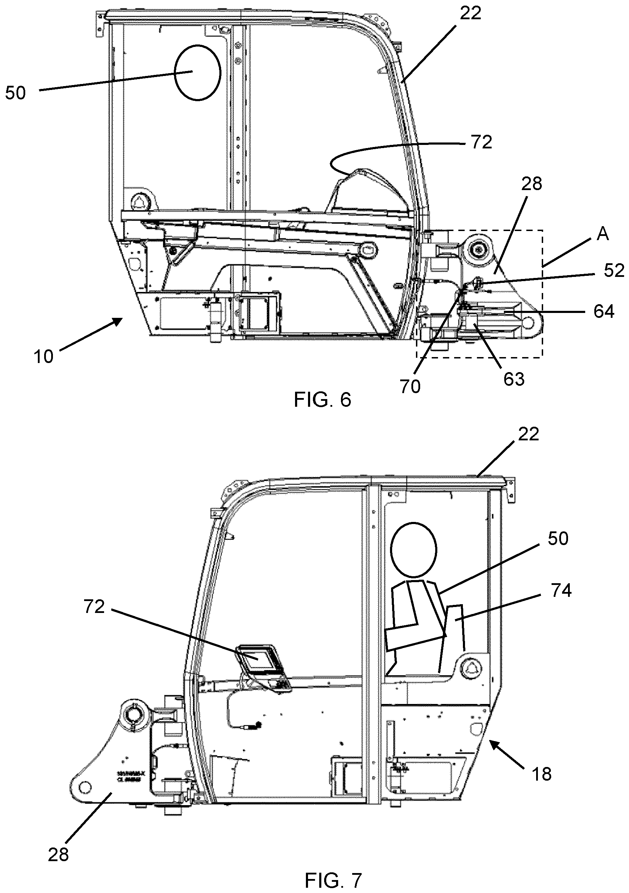

Figures 6 and 7 are views of the superstructure of Figure 4 from opposing sides
Figure 8 is an enlarged isometric view of the box A of a kingpost of Figure 6;
Figure 9 is a block diagram of a control system of the working machine of Figures 1 and 2; and
Figure 10 is a schematic illustration of operation of a camera of the working machine of Figures 1 and 2.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

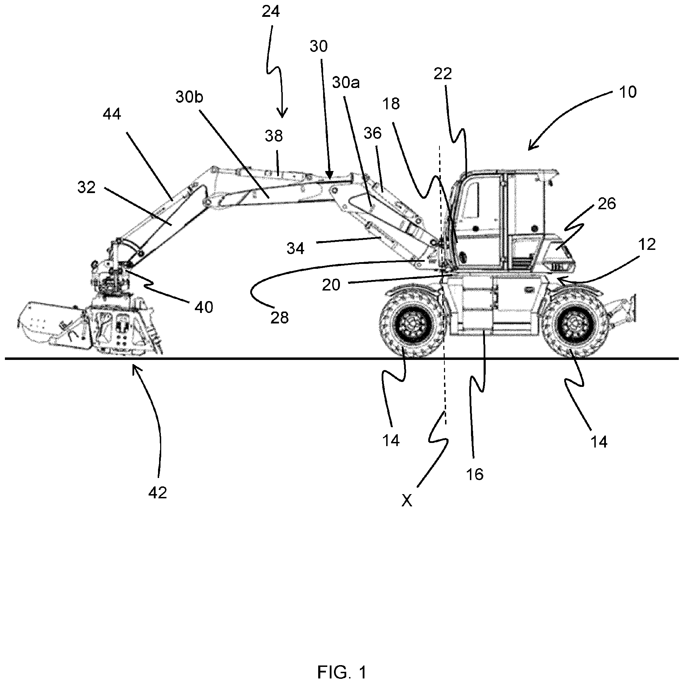

With reference to Figures 1, there is illustrated a working machine 10. In the present embodiment, the working machine 10 may be considered to be a slew excavator.

The working machine 10 has a body 12 supported on a ground engaging propulsion arrangement 14. The body 12 comprises an undercarriage 16 supported on the ground engaging propulsion arrangement 14. A superstructure 18 is connected to the undercarriage 16. The superstructure 18 is connected to the undercarriage 16 by a mounting arrangement 20.

In the arrangement shown, the mounting arrangement 20 is a slewing mechanism in the form of a slewing ring. The mounting arrangement 20 permits rotation of the superstructure 18 relative to the undercarriage 16 in this embodiment. In alternative arrangements it will be appreciated that the superstructure 18 may not be able to rotate relative to the undercarriage 16.

The working machine 10 of the present embodiment includes a ground engaging propulsion arrangement in the form of front and rear wheels 14. In alternative arrangements, the ground engaging propulsion arrangement may be provided in the form of a pair of endless tracks (not shown).

The working machine 10 includes a drive arrangement (not shown) for providing motive power to the ground engaging propulsion system. The drive arrangement may comprise a prime mover and a transmission. The transmission may include a hydraulic pump arrangement configured to be driven by the prime mover. An entirety of the drive arrangement may be positioned below a level coincident with a lower extent of the superstructure, as depicted in Figure 1. In other embodiments the prime mover and hydraulic pump may be located in the superstructure 18.

An operator station in the form of a cab 22 from which an operator can operate the working machine 10 is mounted to the superstructure 18. The cab 22 includes an operator seat (not shown). It will be appreciated that in some arrangements, the working machine 10 may include an open canopy rather than an enclosed cab 22.

The working machine 10 includes a working arm 24. The working arm 24 is connected to the body 12 and is provided for performing working operations. In the arrangement shown, the working arm 24 is connected to the superstructure 18 via a kingpost 28. The kingpost 28 is known in the art, and permits rotation of the working arm 24 about a generally upright axis X relative to the superstructure 18 and about a generally horizontal axis W relative to the superstructure.

The kingpost 28 in this embodiment is located at the front of the superstructure 18, offset to the right of the cab 22.

The superstructure 18 further comprises a counterweight 26 for counterbalancing the weight of the working arm 24 and loads carried by it, positioned at an opposite end of the superstructure to the kingpost 28.

The working arm 24 of the present embodiment is an excavator arm arrangement. The working arm arrangement includes a triple articulated boom 30 pivotally connected to a dipper (stick) 32. The triple articulated boom 30 includes a first section 30a pivotally connected to a second section 30b. A linear actuator in the form of a hydraulic cylinder 34 is provided to raise and lower the first section 30a of the boom 30 relative to the kingpost 28 about the generally lateral axis W. A further hydraulic cylinder 36 is provided to pivot the second section 30b relative to the first section 30a. A yet further hydraulic cylinder 38 is provided to rotate the dipper 32 relative to the boom 30. A mount 40 is provided to pivotally mount an attachment 42 to the dipper 32. A hydraulic cylinder 44 is provided to rotate the attachment 42 relative to the dipper 32.

As depicted, the mount 40 is a tiltrotator to enable the attachment 42 to be rotated relative to the dipper as well as allowing the conventional pivoting of the attachment. In other embodiments a standard non-rotating mount may instead be used.

Alternative boom arrangements may be utilised in other embodiments, such as one-piece booms.

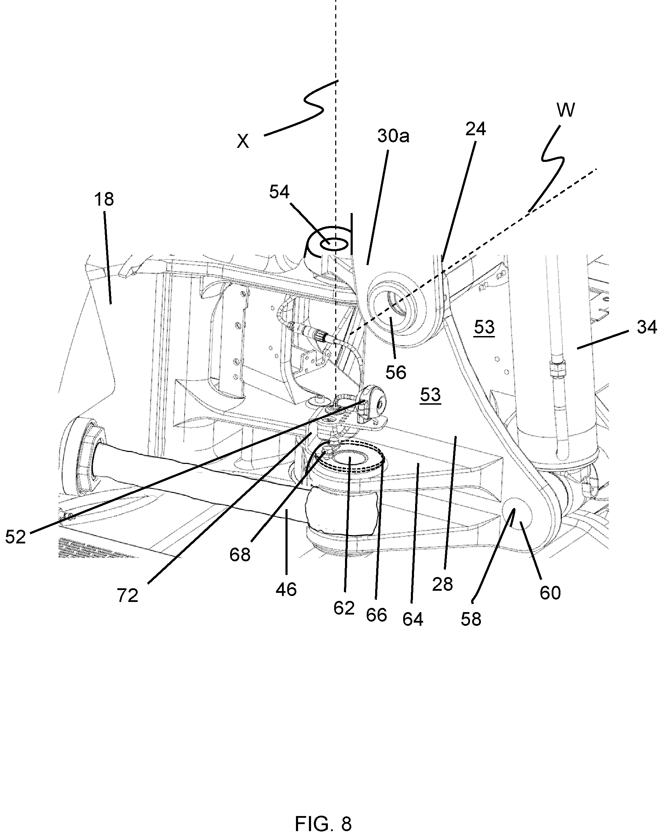

Shown most clearly in Figure 8, a further linear actuator in the form of a hydraulic cylinder 46 is provided to rotate (swing/slew) the working arm 24 about the generally upright axis X at the kingpost 28 relative to the superstructure 18.

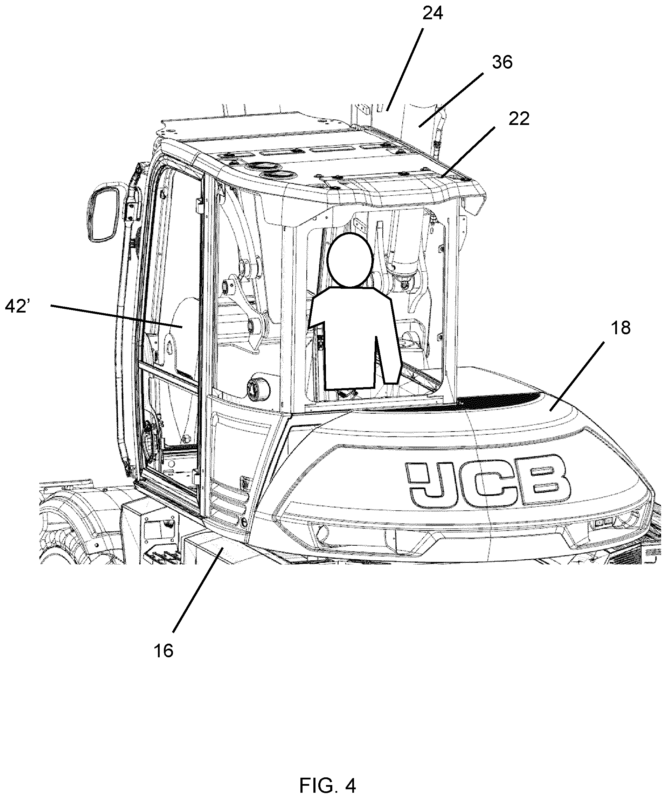

The attachment is shown as a road pothole repair tool 42 in Figure 1, which combines multiple functions into one structure, and a bucket 42' is shown in Figure 4. As such, both attachments 42, 42' are relatively bulky. Various other attachments may be interchangeably mounted to the mount 40, such as, forks, grabs, breakers etc. (not shown) as are well known.

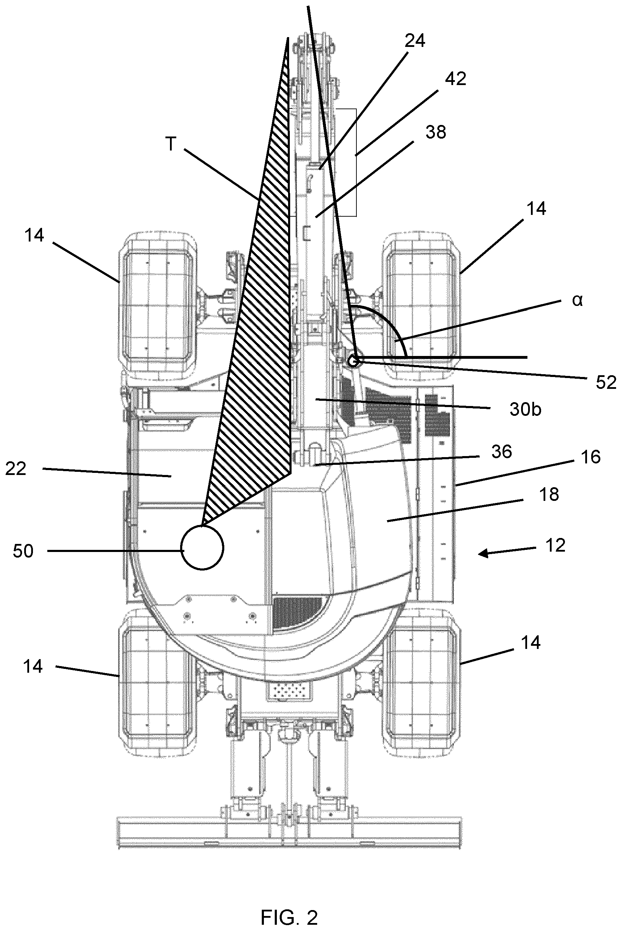

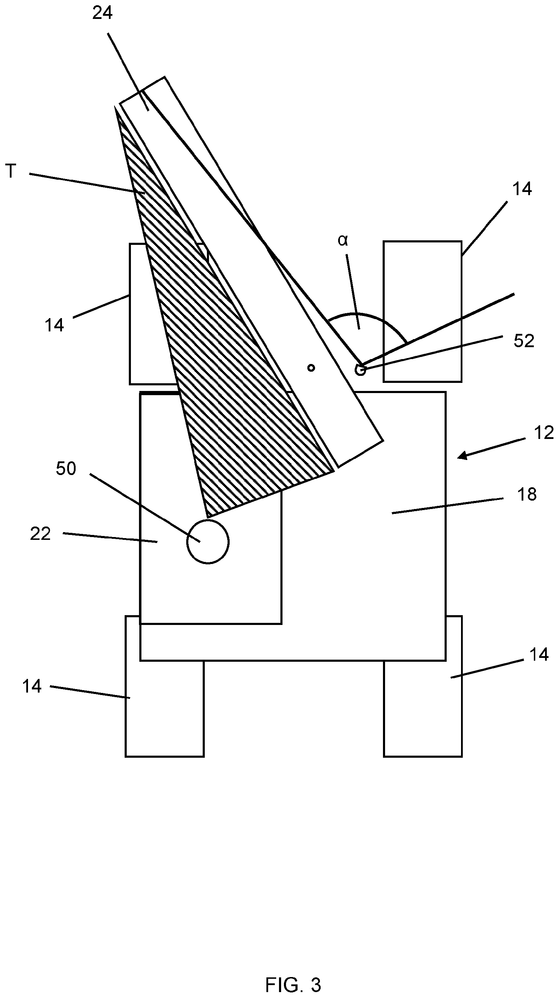

Referring to Figures 2, 3 and 4, it can be appreciated that the working arm 24 and attachment 42, 42' at least partially obscure the visibility of an operator 50 seated in the cab forward and to the right of the working arm 24, particularly when folded for a roading operation. The angle over which the view of the operator 50 is potentially obscured is illustrated by the shaded triangle T of Figures 2 and 3. As the working arm 24 pivots about axis X, and/or the boom 30 and dipper 32 of the working arm pivot about their respective horizontal axes, and/or the attachment 42, 42' moves relative to the dipper, the actual obscured area varies. The obscured area may mask or hide people and objects. These people or objects may, as a result be hit by the working arm 24 during working operations, or another part of the machine 10 if travelling, potentially causing damage or injury.

To allow the operator 50 to see what may be otherwise obscured by the boom, a camera 52 is mounted where it has a view to the side of the working arm 24 remote from the cab 22.

In the present embodiment, the camera 52 is mounted to the kingpost 28 and moves together with the swinging motion of the kingpost.

Specifically, in this embodiment, the kingpost 28 is formed from two vertically arranged spaced plates 53 provided with a bore 54 on mounts extending rearward from the plates to receive a pivot pin 55 to mount the kingpost 28 to the superstructure about axis X, a bore 56 to receive a pivot pin 57 to mount the boom 30 to the kingpost about axis W, a bore 58 to receive a pivot pin 60 to mount the hydraulic cylinder 34 to the kingpost to raise and lower the boom 30, and a bore 62 to receive a pivot pin 63 and mount the hydraulic cylinder 46 to the kingpost to cause the kingpost to swing about axis X. The bore 62 is provided in a bracket 64 projecting substantially horizontally from the right side of one of the plates 53 of the kingpost 28, remote from the cab 22.

The pivot pin 63 is provided with a retaining cap 66 (shown in broken lines in Figure 8), by which it is bolted down onto the bracket 64 by a pair of bolts 68.

In this embodiment the camera 52 is mounted to a support bracket 70, and the bracket is also mounted to the kingpost by the bolts 68. This positions the camera above the support bracket 70.

This location conveniently provides an unobstructed view for the camera 52 alongside and to the right of the working arm 24, whilst at the same time providing inherent protection due to its position above and behind a leading edge of the bracket 64.

In other embodiments, the camera 52 may instead be mounted to the kingpost 28 in other locations, for example by being mounted to one of the plates 53, or to an underside of the bracket 64. In addition the camera may be mounted via an alternative connection, such as magnetically, by welding or adhesive.

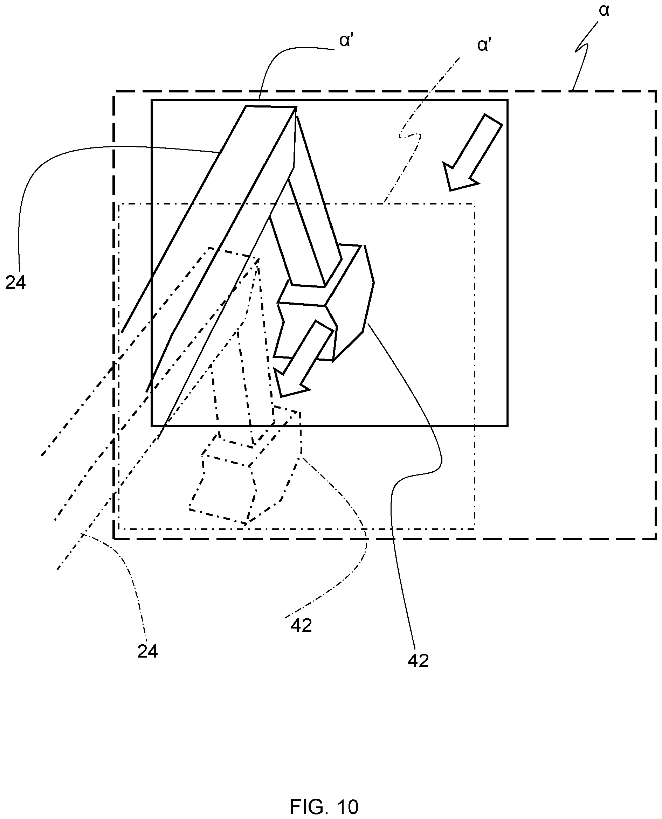

The viewing angle of the camera is illustrated by the arc α in Figures 2, 3 and 9 and the rectangle α in Figure 10, being in this embodiment, slightly more than 90° horizontally, but may be greater or less than this in other embodiments, depending upon the coverage required. Similar vertical viewing angles may also be provided.

Significantly, as the working arm 24 swings about the vertical axis X, and the blind spot changes, as shown in Figures 2 and 3, the camera 52 mounted in this location automatically moves to cover the blind spot.

The camera 52 is connected to provide a live video feed to a display 72 mounted in the cab 22 in line of sight of the operator 50 when seated on a seat 74 in the cab. In this embodiment the display 72 is mounted in the cab forward and to the right of the seat 74, below the eyeline of the operator 50. This location is beneficial as it is essentially the same direction in which the operator 50 may look to view the working arm 24, meaning it is also intuitive for the operator to look in this direction to see on the display 72 what may otherwise be obscured by the working arm 24.

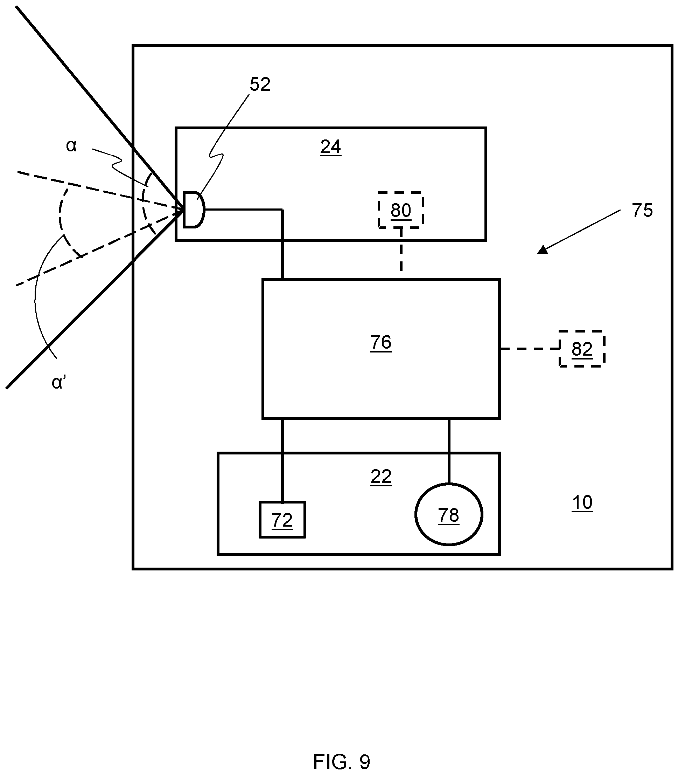

Figure 9 is a schematic representation of the control system 75 for the operation of the camera. In this embodiment, the camera 52 is a digital video camera with a CMOS or CCD-type sensor whose video signal is transmitted to a controller 76 via a dedicated signal cable. In other embodiments, the video signal may be transmitted wirelessly to the controller 76. The controller 76 may process the video signal e.g. to adjust brightness, sharpness or contrast or to overlay markings or data thereon, before transmitting the signal in near real-time to the display 72.

The controller 75 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 75 may include an associated memory or the memory may be located locally to the controller or remotely. The memory may be a non-volatile flash memory.

In this embodiment the display 72 is a multi-function screen, such as a TFT LCD that may be utilised by the controller 76 to display machine operating data, such a fuel level, engine speed, machine settings etc. As such, the camera video signal may occupy only part of the total area of the display 72, with other data on a separate area. In addition or alternatively, a user input 78 such a button, dial or touch-sensitive part of the display 72 itself may be utilised by the operator 50 to signal the controller 76 to switch between different display layouts, some of which may not include the camera output.

Further, the operator 50 may be able to use the user input 78 to alter the view of from the camera shown on the display 72. For example, the operator 50 may be able to digitally or optically zoom in on part of the field of view. If a digital zoom, the effect of the zoom may be achieved by displaying the output of a subset of the individual photosensors of the camera 52 on the display 72. For example, for a camera having a 4000x3000 array of photosensors (pixels), a cropped array of 1000x750 photosensor signals may be shown on the display 72 to achieve a narrower, zoomed in field of view α', as shown in Figures 9 and 10. The operator 50 may also be able to digitally create an effect of panning or tilting the camera by moving the cropped view α' around the complete photosensor array utilising the user input 78 as illustrated in Figure 10 by the movement of the box signifying the cropped field of view α'. In other embodiments (not shown), the camera 52 may have a motorised mount to achieve physical panning or tilting under the control of the operator 50.

In a further embodiment, the control system 75 is provided with one or more position sensors 80 (illustrated in broken lines in Figure 9) that indicate the position of the working arm 24 and/or attachment 42 with respect to the superstructure 18.

Suitable sensors 80 may include one or more accelerometers mounted on to one or more sections of the working arm, angle sensors mounted at pivot points, sensors arranged to measure the extension of one or more of the hydraulic cylinders 34, 36, 38, 44. The outputs of multiple such sensors may be combined geometrically to derive the position of the working arm and/or attachment. Inertial sensors, optical image recognition sensors (e.g. from processing the output of the camera 52 itself with a suitable algorithm running on the controller 76, for example as described in WO2018/203091 to the present applicant) may also be used. In other embodiments the one or more position sensors may be provided to measure the displacement of operator controls (not shown) for moving the working arm 24 or measure the flow of hydraulic fluid to or from the hydraulic cylinders 34, 36, 38, 44 to derive the position.

The position may be determined in one axis (e.g. a vertical axis), a plane defined by two axes (e.g. a vertical plane aligned with the working arm 24) or on three axes relative to the position of the camera 52.

The position of the working arm 24 derived or inferred from the sensor(s) 80 may then be utilised to automatically adjust the output from the camera 52 shown on the display 72 in accordance with a suitable algorithm of the controller 76. For example a cropped, zoomed in image may show what would otherwise be the blind spot caused by the working arm 24 and/or attachment 42 in a particular position. In one example, as depicted in Figure 10, by the movement of the field of view box α' if the attachment 42 is lowered by the working arm 24, the live video image on the display lowers in conjunction with the movement of the attachment 42 to provide an enlarged view of a blind spot caused by the attachment, rather than a more general view of the entire field of view of the camera 52.

Further, if the attachment 42 is moved away from the superstructure 18 by manipulating the working arm, the number of photosensors in the cropped array may be reduced to, in effect, zoom in further on a narrower field of view to afford a larger video image of the blind spot created by the attachment than would otherwise be the case.

In operation, the operator 50 may either manually select the camera 52 video output to be shown on the display 72, or the controller may monitor one or more machine 10 parameters, such as machine travelling speed as sensed by a speed sensor 82 of a suitable known type, working arm 24 swinging about axis X away from the operator, and/or superstructure 18 slewing clockwise relative to the undercarriage, and automatically display the video output. For example, if the forward speed exceeds a threshold such as 5km/h the camera 52 video output may be shown on the display 72.

During the display of the camera 52 video output, if the working arm 24 is extended away from the superstructure 18, and/or or raised/lowered the video output may automatically be adjusted as described above to further enhance the operator's 50 view.

Such adjustments in view may also assist the operator 50 in performing working operations, by enabling them to see the far side of the attachment 42 more clearly. The automatic view adjustment and/or zooming in may therefore enable more accurate positioning of the attachment for the task to be undertaken, such as digging around an obstacle, or repairing a pothole in a road.

In an embodiment, based on a first machine operation input, such as when the controller senses travelling speed of the machine 10 above a threshold using the speed sensor 82, the controller 76 may be configured to show a fixed view from the camera 52 on the the display 72 to enable the operator 50 to have a good overall view of their blind spot whilst roading or moving around a job site. Based on a different input, such as a travelling speed below the threshold speed, or when movement of the working arm 24 is sensed via sensor(s) 80, the controller 76 may switch to a separate second operating mode in which the view on the display 72 is adjusted based on the working arm 24 position, as described above, to assist with seeing the blind spot specifically proximate to the working arm 24 or attachment, for both safety and accurate attachment 42 placement.

In a further embodiment, the controller 76 may utilise a suitable image recognition algorithm, e.g. such as trained neural network, to identify particular obstacles in the field of view α of the camera 52, such as people, vehicles or animals, and alert the operator 50 accordingly. For example, if a person is identified in the field of view, an audible alert may be sounded by the control system 75 and/or a visible cue may be provided on the display 72, such as a flashing indicia around the person. In addition, or alternatively, the controller 76 may issue a signal to slow down or to stop movement of the working arm and/or slow down or stop movement of the ground engaging propulsion arrangement 14 of the working machine 10.

The one or more embodiments are described above by way of example only and it will be appreciated that the variations are possible without departing from the scope of protection afforded by the appended claims. For example a dedicated display may be provided in the cab for the live video feed from the camera, instead of a multifunction display. Certain aspects of the present teachings may be utilised in other working machines with working arms. This may include, telehandlers, rotating telehandlers, backhoe loaders, wheel loaders, skid steer loaders and tractors, for example. The location of the operator station relative to the working arm may be different on other classes of machine, and therefore the position of the camera may need to be adjusted to eliminate or minimise the blind spot.

## Claims

1. A working machine comprising:
a ground engaging propulsion structure;
a body mounted to the ground engaging propulsion structure;
an operator station mounted to the body;
a working arm mounted to the body such that the working arm and/or an implement attached thereto obscures a portion of a sight line from an operator seated in the operator station;
wherein a camera is arranged on a structure moveable with the working arm on a side of the arm remote from the operator station; and wherein a display at the operator station is arranged to show a live video image from the camera of at least a portion of the sight line obscured by the working arm.

2. The working machine of claim 1, wherein the working arm is pivotably mounted to the body for movement about a substantially vertical axis relative to the body and the camera is mounted so as to move at least together with the movement of the arm about the vertical axis, optionally, wherein the working arm comprises a kingpost mounted to the body for movement about the vertical axis and the camera is mounted to the kingpost.

3. The working machine of claim 2, wherein a linear actuator is mounted between the working arm and the body to effect the pivotal motion, a bracket being provided on the working arm to secure the actuator, and the camera being mounted to the bracket, optionally, wherein a pivot pin mounts the linear actuator to the bracket and the camera mounts to a fixing also utilised to fix the pivot pin.

4. The working machine of any preceding claim, wherein the display is mounted to the operator station at a side of the operating station proximate to the working arm, optionally, wherein the display is in a line of sight from the operator to the working arm.

5. The working machine of any preceding claim, further comprising a control system arranged to control operation of the camera and/or display, optionally, further comprising at least one sensor to determine or infer a position of the working arm, in particular a vertical position of the working arm, and to adjust the video image shown on the display in response to this position, optionally, wherein the controller is configured so as to output to the display a subset of the total field of view captured by the camera, so as to present a zoomed in video image to the operator via the display, optionally, wherein the zoomed in image is configured to follow the movement of the working arm as determined by the one or more sensors.

6. A controller for a camera control system of a working machine comprising a working arm, the controller being configured to receive an video signal from a camera and a position signal from at least one position sensor able to derive or infer a position relative to a body of the working machine of the working arm and/or an attachment mounted to the working arm, the controller being further configured to cause an output video signal to be sent to a display to be adjusted based on the position derived or inferred from the at least one position sensor.

7. The controller of claim 6, wherein the video signal to be sent to the display is orientated in a pre-determined direction based on the position derived or inferred from the at least one position sensor, optionally, wherein the camera supplies a video signal from an array of camera photosensors and the controller is configured to select a subset of said photosensors as the output video signal to orientate the output signal in the pre-determined direction, optionally, wherein the controller is configured to continuously vary the selected subset of photosensors in response to changes in the position signal.

8. The controller of claim 6 or claim 7, wherein the camera is motorised to pan and/or tilt and/or zoom and the controller is further configured to output a panning and/or tilting and/or zooming signal in response to the position signal.

9. The controller of any one of claims 6 to 8, wherein the controller is configured to operate in a first fixed view operating mode based on at least a first machine operation input, and to operate in a second operating mode in which the output video signal to be sent to the display to be adjusted based on the position derived or inferred from the at least one position sensor based on a second machine operation input.

10. The controller of any one of claims 6 to 9, wherein the video signal is the position signal and the controller runs an algorithm, such as a machine vision algorithm, to process the video signal to derive the working arm and/or attachment position.

11. The controller of any one of claims 6 to 10 wherein the controller runs an image classification algorithm to process the video signal, and if the algorithm identifies a pre-determined object within the video signal, the controller is configured to issue an alert signal to an operator and/or to issue a signal to cease or slow down movement of the working arm relative to the working and/or cease or slow down movement of the working machine.

12. A camera control system for a working machine, the camera control system comprising a controller according to any one of claims 6 to 11, a camera arranged to provide an video signal to the controller; at least one position sensor arranged to provide the position signal to the controller and a display arranged to display a video image to an operator based on an video signal issued by the controller.

13. A working machine comprising a controller according to any one of claims 6 to 11 or a camera control system according to claim 12.

14. The working machine of claim 13 comprising a ground engaging propulsion structure;
a body mounted to the ground engaging propulsion structure;
an operator station mounted to the body; and
a working arm mounted to the body such that the working arm and/or an implement attached thereto obscures a portion of a sight line from an operator seated in the operator station;

15. The working machine of any one of claims 1 to 5 or to claim 13 or 14, wherein the body comprises of an undercarriage mounted to the ground engaging propulsion structure and a superstructure slewably mounted to the undercarriage, optionally, wherein the working arm is mounted to the superstructure; optionally wherein the working machine is a slew excavator.
